Europäisches Patentamt

European Patent Office

Office européen des brevets

(11) Veröffentlichungsnummer: **0 349 880**

**A1**

# (12) EUROPÄISCHE PATENTANMELDUNG

(21) Anmeldenummer: **89111631.1**

(22) Anmeldetag: **26.06.89**

(51) Int. Cl.⁴: **H02H 3/33 , H02H 3/05**

(30) Priorität: **07.07.88 DE 3823094**

(43) Veröffentlichungstag der Anmeldung:
**10.01.90 Patentblatt 90/02**

(84) Benannte Vertragsstaaten:
**AT BE CH DE ES FR GB GR IT LI NL**

(71) Anmelder: **Siemens Aktiengesellschaft**
**Wittelsbacherplatz 2**
**D-8000 München 2(DE)**

(72) Erfinder: **Harr, Dieter, Dipl.-Ing.**
**Fr.-Ebert-Strasse 63**
**D-8400 Regensburg(DE)**
Erfinder: **Kleemeier , Manfred, Dipl.-Ing. (FH)**
**Max-Planck-Strasse 2**
**D-8402 Neutraubling(DE)**

(54) **Einrichtung zum Schutz vor Fehlerströmen.**

(57) Einrichtung zum Schutz vor Fehlerströmen, bei der eine erste Untereinrichtung, die als Fehlerstromschutzschalter wirkt, zum Schutz vor Fehlerströmen einer ersten Gattung, mit einer zweiten Untereinrichtung, die als Differenzstromschalter wirkt, zum Schutz vor Fehlerströmen einer zweiten Gattung, kombiniert ist. Erfindungsgemäß ist vorgesehen, daß die erste Untereinrichtung (1), Fehlerstromschutzschalter, dafür ausgelegt ist, daß sie zumindest auf Wechselfehlerströme anspricht, und daß die zweite Untereinrichtung (2), Differenzstromschalter, dafür ausgelegt ist, auf Fehlerströme aus Gleichstrom, Wechselstrom und pulsierende Fehlerströme anzusprechen, und daß die Empfindlichkeit ihrer Auslösung so auf die des Fehlerstromschutzschalters abgestimmt ist, daß die Auslösung bei Wechselfehlerstrom und bei pulsierenden Fehlerströmen im wesentlichen oberhalb der des Fehlerstromschutzschalters liegt und die Auslösung bei Fehlerströmen aus glattem Gleichstrom der Empfindlichkeit des Fehlerstromschutzschalters bei Wechselfehlerstrom bzw. bei pulsierenden Fehlerströmen entspricht.

Xerox Copy Centre

## Einrichtung zum Schutz vor Fehlerströmen

Die Erfindung bezieht sich auf eine Einrichtung zum Schutz vor Fehlerströmen, bei der eine erste Untereinrichtung als Fehlerstromschutzschalter wirkt, zum Schutz vor Fehlerströmen einer ersten Gattung, mit einer zweiten Untereinrichtung, die als Differenzstromschalter wirkt, zum Schutz vor Fehlerströmen einer zweiten Gattung, kombiniert ist. Derartige Schutzschaltungen sind bekannt (DE-OS 25 55 302, DE-PS 23 48 881).

Netzspannungsunabhängige Fehlerstromschutzschalter können bei Wechselfehlerströmen und bei pulsierenden Fehlerströmen auslösen (DE-PS 20 36 497). Derartige Fehlerströme induzieren in der Sekundärwicklung eines Summenstromwandlers eine Spannung, die in einem Sekundärkreis einen Strom bewirkt, der einen Halte- oder Sperrmagnet betätigt, wodurch über ein Schaltschloß Kontakte geöffnet werden können. Jahrzentelanger Betrieb in Fehlerstromschutzschaltern, in kombinierten Fehlerstrom- und Leitungsschutzschaltern und in Fehlerstromschutzrelais hat die hohe Zuverlässigkeit dieser Auslöser in Praxis gezeigt. Derartige Schutzeinrichtungen entsprechen den Bestimmungen nach VDE 0664, Teil 1, 10/85.

Netzspannungsabhängige Differenzstromschalter, wie sie in den Vorschriften in dem Entwurf VDE 0641, Teil 4 für kombinierte Leitungsschutz- und Differenzstromschalter beschrieben sind, können bei gleichen Stromformen wie Fehlerstromschutzschalter auslösen. Die auf der Sekundärseite eines Summenstromwandlers induzierte Spannung wird elektronisch verarbeitet und bewirkt die Auslösung in der Regel mittels eines Arbeitsrelais. Die Auswerteelektronik und das Arbeitsrelais benötigen eine Hilfsspannung. Bei Unterbrechung der die Auswerteelektronik versorgenden Hilfsspannung kann die Schutzeinrichtung nicht Auslösen und ist dann wirkungslos. Darüber hinaus weist jedes für die Elektronik benötigte elektrische oder elektronische Bauteil eine bestimmte Ausfallrate auf, die die Zuverlässigkeit beeinträchtigen kann. Mit steigendem Einsatz elektronischer Bauteile bei einem Differenzstromschalter erhöht sich auch das Risiko, daß eine Schutzeinrichtung versagt.

Durch Kombinationen aus Schutzeinrichtungen nach dem Prinzip des Fehlerstromschutzschalters mit solchen, die nach dem Prinzip des Differenzstromschalters arbeiten, kann die Sicherheit erhöht werden.

Auf Fehlerströme aus langsam ansteigendem glattem Gleichstrom, wie sie durch elektrische und elektronische Geräte heutiger Bauart erzeugt werden, können Fehlerstromschutzschalter nicht ansprechen, da der Summenstromwandler kein Signal transformieren kann. Ein überlagerter Gleichstromanteil schwächt das transformierte Signal und kann auch dazu führen, daß der Schutzschalter nicht auslösen kann. Bei Kombinationen aus Untereinrichtungen nach dem Arbeitsprinzip des Fehlerstromschutzschalters mit Untereinrichtungen nach dem Arbeitsprinzip des Differenzstromschalters ist jedoch störend, daß der Differenzstromschalter leicht zu Fehlauslösungen führen kann. Ein Verbraucher wird dann abgeschaltet, obwohl ein Fehlerstrom nicht vorliegt. Derartige Fehlabschaltungen können in der Praxis sehr unangenehm sein.

Der Erfindung liegt die Aufgabe zugrunde, eine Einrichtung zum Schutz von Fehlerströmen zu entwickeln, die aus Untereinrichtungen nach dem Wirkungsprinzip des Fehlerstromschutzschalters und dem des Differenzstromschalters arbeitet, wobei der Schutz vor Fehlerströmen einer ersten Gattung durch den Schutz vor Fehlerströmen einer zweiten Gattung ergänzt wird, bei der jedoch Fehlauslösungen vom Differenzstromschalter her vermieden werden.

Die Lösung der geschilderten Aufgabe besteht nach der Erfindung darin, daß die erste Untereinrichtung Fehlerstromschutzschalter dafür ausgelegt ist, daß sie zumindest auf Wechselfehlerströme anspricht und daß die zweite Untereinrichtung Differenzstromschutzschalter dafür ausgelegt ist, auf Fehlerströme aus Gleichstrom, auf Wechselstrom und pulsierende Fehlerströme anzusprechen, und daß die Empfindlichkeit ihrer Auslösung so auf die des Fehlerstromschutzschalters abgestimmt ist, daß die Auslösung bei Wechselfehlerstrom und bei pulsierenden Fehlerströmen im wesentlichen oberhalb der des Fehlerstromschutzschalters liegt und die Auslösung bei Fehlerströmen aus glattem Gleichstrom der Empfindlichkeit des Fehlerstromschutzschalters bei Wechselfehlerstrom bzw. pulsierenden Fehlerströmen entspricht. Bei steigendem Gleichstromanteil wird der Differenzstromschalter hinsichtlich Wechselfehlerstrom und pulsierende Fehlerströme empfindlicher und der Fehlerstromschutzschalter unempfindlicher, so daß ein gleitender Übergang auf eine Auslösung durch den Differenzstromschalter erfolgt. Dadurch daß der Differenzstromschalter bezüglich der Auslösung bei Wechselfehlerstrom und bei pulsierenden Fehlerströmen relativ unempfindliche eingestellt ist, werden Fehlauslösungen durch Störimpulse vermieden. Falls eine Untereinrichtung ausfallen sollte, stellt die andere Untereinrichtung eine Basisauslösung sicher.

Nach einer Weiterbildung der Erfindung sind beim Fehlerstromschutzschalter und oder alternativ beim Differenzstromschalter Vorkehrungen zum Schutz auch vor Fehlauslösungen bei Stoßströmen getroffen. Hierzu können an sich bekannte Maßnahmen dienen, wie sie beispielsweise in EP-B1-106 045 und in EP-B1-133 501 beschrieben sind. Nach der ersten Druckschrift wird Stoßstromfestigkeit erzielt und nach der zweiten Druck schrift ein frequenzunabhängiger Betrieb ermöglicht und dennoch Stoßstromfestigkeit erreicht.

Die Erfindung soll nun anhand eines in der Zeichnung grob schematisch wiedergegebenen Ausführungsbeispiels näher erläutert werden:

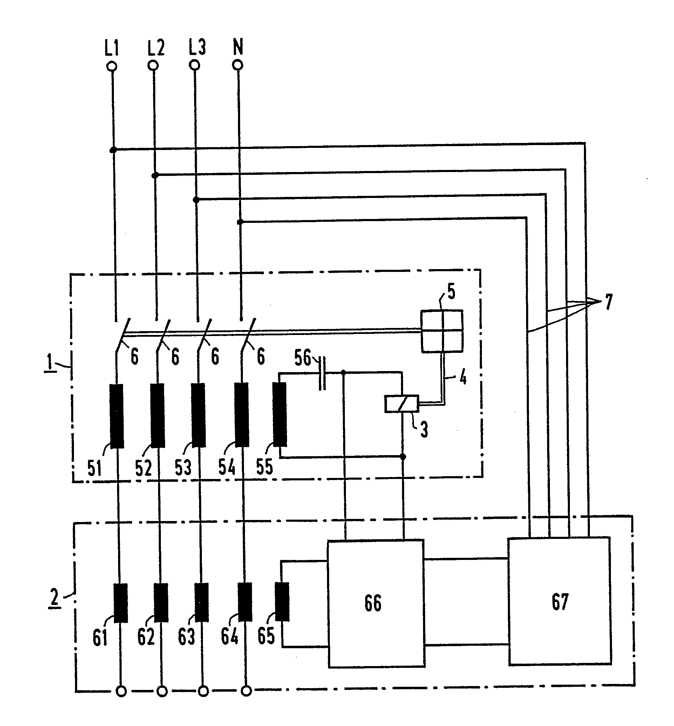

Die Einrichtung zum Schutz vor Fehlerströmen nach FIG 1 weist eine erste Untereinrichtung 1 nach dem Wirkungsprinzip eines Fehlerstromschutzschalters und eine zweite Untereinrichtung 2 nach dem Wirkungsprinzip eines Differenzstromschalters auf, wobei im Ausführungsbeispiel das Auslöserelais 3 des Fehlerstromschutzschalters 1 mit verwendet wird. Die Untereinrichtung 1 arbeitet mit einem Summenstromwandler mit den Primärwicklungen 51, 52, 53 und 54 und einer Sekundärwicklung 55. Im Auslösekreis ist ein Kondensator 56 angeordnet, um in an sich bekannter Weise eine Auslösung bei pulsierenden Fehlerströmen zu ermöglichen (DE-PS 20 36 497). Das Auslöserelais 3, das als Haltemagnet oder als Sperrmagnet ausgeführt sein kann, arbeitet über eine Wirkverbindung 4 auf ein Schaltschloß 5, das die Schaltkontakte 6 öffnet. Die Schaltkontakte liegen in den Versorgungsleitungen zu einem Verbraucher, den Außenleitern L1, L2, L3 und dem Mittelpunktleiter bzw. Neutralleiter N.

Die zweite Untereinrichtung 2 mit dem Wirkungsprinzip eines Differenzstromschalters weist im Ausführungsbeispiel einen Summenstromwandler mit den Primärwicklungen 61, 62, 63 und 64 und der Sekundärwicklung 65 auf. Die Sekundärwicklung 65 ist mit einer Auswerteelektronik 66 verbunden, die von einem Netzteil 67 und der Hilfsspannungsquelle 7 versorgt wird.

Wenn ein glatter Gleichfehlerstrom, beispielsweise ein Ableitstrom, fließt, dessen Wert unterhalb der Ansprechschwelle der Untereinrichtung 2 mit dem Wirkungsprinzip eines Diffe renzstromschalters für Fehlerstrom aus glattem Gleichstrom bleibt, wird die Untereinrichtung 1 mit dem Wirkungsprinzip des Fehlerstromschutzschalters auch für eine Auslösung bei Wechselfehlerstrom und pulsierenden Fehlerströmen unempfindlicher. Wenn sich nun Wechselfehlerströme oder pulsierende Fehlerströme dem fließenden glatten Gleichfehlerstrom im Summenstromwandler der zweiten Untereinrichtung 2 überlagern, führt das zur Auslösung bei Werten unterhalb der entsprechend unempfindlich gewordenen Ansprechschwelle für die Untereinrichtung 1 mit dem Wirkungsprinzip des Fehlerstromschutzschalters.

Durch dieses Übernehmen der Funktion durch die zweite Untereinrichtung 2 wird sichergestellt, daß bei Wechselfehlerströmen und bei pulsierenden Fehlerströmen die erste Untereinrichtung mit dem Wirkungsprinzip des Fehlerstromschutzschalters netzspannungsunabhängig ordnungsgemäß auslöst, bei glattem, auch langsam ansteigendem Gleichfehlerstrom löst die zweite Untereinrichtung 2 mit dem Wirkungsprinzip des Differenzstromschalters netzspannungsabhängig aus. Wenn gleichzeitig glatter Gleichfehlerstrom und Wechsel- oder Pulsfehlerstrom die zweite Untereinrichtung 2 mit dem Wirkungsprinzip des Differenzstromschalters empfindlicher macht, wird die Auslösung also durch die zweite Untereinrichtung sichergestellt. Die erste Untereinrichtung kann ebenso wie die zweite Untereinrichtung als Anbauteil oder als vollständiger Schutzschalter ausgeführt sein. So kann also die zweite Untereinrichtung mit einem eigenen Auslöserelais, zweckmäßigerweise einem Arbeitsrelais, arbeiten. Zusätzlich können besondere Maßnahmen zur Festigkeit gegen ungewolltes Auslösen durch Stoßströme vorgesehen werden, wie sie an sich bekannt sind (beispielsweise EP-B1 106 045).

## Ansprüche

1. Einrichtung zum Schutz vor Fehlerströmen, bei der eine erste Untereinrichtung, die als Fehlerstromschutzschalter wirkt, zum Schutz vor Fehlerströmen einer ersten Gattung, mit einer zweiten Untereinrichtung, die als Differenzstromschalter wirkt, zum Schutz vor Fehlersrömen einer zweiten Gattung, kombiniert ist, **dadurch gekennzeichnet,** daß die erste Untereinrichtung (1), Fehlerstromschutzschalter, dafür ausgelegt ist, daß sie zumindest auf Wechselfehlerströme anspricht, und daß die zweite Untereinrichtung (2), Differenzstromschalter, dafür ausgelegt ist, auf Fehlerströme aus Gleichstrom, Wechselstrom und pulsierende Fehlerströme anzusprechen, und daß die Empfindlichkeit ihrer Auslösung so auf die des Fehlerstromschutzschalters abgestimmt ist, daß die Auslösung bei Wechselfehlerstrom und bei pulsierenden Fehlerströmen im wesentlichen oberhalb der des Fehlerstromschutzschalters liegt und die Auslösung bei Fehlerströmen aus glattem Gleichstrom der Empfindlichkeit des Fehlerstromschutzschalters bei Wechselfehlerstrom bzw. bei pulsierenden Fehlerströmen entspricht.

2. Einrichtung nach Anspruch 1, **dadurch gekennzeichnet,** daß bei der ersten Untereinrichtung (1), Fehlerstromschutzschalter und/oder der zweiten Untereinrichtung (2), Differenzstromschalter, Vorkehrungen zum Schutz vor Fehlauslösungen bei Stoßströmen getroffen sind.

88 P 3265

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | FR-A-2246097 (SIEMENS) <br> * Seite 5, Zeile 11 - Seite 6, Zeile 20 * <br> & DE-A-2348881 <br> --- | 1 | H02H3/33 <br> H02H3/05 |
| Y | FR-A-2416580 (FELTEN & GUILLEAUME) <br> * Seite 3, Zeilen 26 - 34 * <br> * Seite 5, Zeilen 7 - 11 * <br> --- | 1 | |
| Y | WO-A-8606563 (BROWN, BOVERI) <br> * Seite 10, Zeile 31 - Seite 13, Zeile 7 * | 1 | |
| A | <br> --- | 2 | |
| A | DE-A-3531023 (BROWN, BOVERI) <br> * Spalte 2, Zeilen 20 - 31 * <br> --- | 1 | |
| A, D | DE-A-2555302 (BROWN, BOVERI) <br> * das ganze Dokument * <br> ----- | 1 | |

| | |
|---|---|
| | **RECHERCHIERTE SACHGEBIETE (Int. Cl.5)** |
| | H02H |

Der vorliegende Recherchenbericht wurde für alle Patentansprüche erstellt

| Recherchenort | Abschlußdatum der Recherche | Prüfer |
|---|---|---|
| DEN HAAG | 04 OKTOBER 1989 | LIBBERECHT L.A. |

EPO FORM 1503 03.82 (P0403)